# EUROPEAN PATENT SPECIFICATION

(11) **EP 2 923 424 B1**
(45) Date of publication and mention of the grant of the patent: **30.06.2021**
(21) Application number: 12794692.9
(22) Date of filing: 23.11.2012
(51) Int. Cl.: H02H 9/04, H02J 3/14

(54) **AN AC TEMPORARY LOAD DEVICE AND DISTRIBUTION SYSTEM FOR OPERATING AN ELECTRIC MACHINE OR ELECTRICAL LOAD POWERED BY A LONG CABLE**
TEMPORÄRE AC-LAST-VORRICHTUNG UND VERTEILUNGSSYSTEM ZUM BETREIBEN EINER ELEKTRISCHEN MASCHINE ODER EINER ELEKTRISCHEN LAST MIT ANTRIEB DURCH EIN LANGES KABEL
DISPOSITIF DE CHARGE TEMPORAIRE EN COURANT ALTERNATIF ET SYSTÈME DE DISTRIBUTION DESTINÉ À FAIRE FONCTIONNER UNE MACHINE ÉLECTRIQUE OU UNE CHARGE ÉLECTRIQUE ALIMENTÉE PAR UN LONG CÂBLE

(43) Date of publication of application: 30.09.2015
(73) Proprietor: ABB Schweiz AG, 5400 Baden (CH)
(72) Inventor: WIIK, Jan, 0575 Oslo (NO); PIASECKI, Wojciech, 30-009 Krakow (PL); RONGVE, Knut, 5144 Fyllingsdalen (NO)
(74) Representative: Kransell & Wennborg KB
(86) International application number: PCT/EP2012/073449
(87) International publication number: WO 2014/079508

(56) References cited:
- EP-A2- 2 341 607
- WO-A1-2009/115895
- WO-A1-2012/116742
- WO-A2-2012/034984
- WO-A2-2012/076015
- US-A- 5 734 256
- None

## Description

### TECHNICAL FIELD.

The present invention is concerned with a temporary load device for operating an electric machine or an electrical load which is supplied with AC power. The temporary load device is advantageous in particular when used to control a subsea electrical power load or machine supplied by a long cable in an installation for production, distribution and/or processing in the Oil & Gas industry.

### TECHNICAL BACKGROUND

Electrical power transfer over long cables is frequently used to feed distant platforms in the oil & gas industry as well as feeding subsea loads which may be located far away from existing platforms. Such power loads often include large motors used in turn to power pumps or compressors. In order to achieve sufficient voltage quality, voltage control measures are typically performed onshore or topside, using for example variable transformers with a tap changer. However, during severe dynamics, such as rapid load reduction, the voltage at the receiving end of the long cable might for a short time be in excess of what the equipment can tolerate.

This is generally because for long step-out applications, where the cable length can be 10km or more, there is a potential risk for over-voltage generation in case of a shutdown or a load drop. This is related to the capacitive nature of long power cables and the transmission frequency. For electrical consumers like induction motors, the effect of long power cables can generate over-voltages caused by a phenomena called self excitation. The self-excitation of induction motors or Ferranti effect can occur if the electrical source is suddenly disconnected while the motor is running. The capacitive contribution from the cable will then keep the rotor magnetized, and the induction motor works as a generator, and produces harmful over-voltages and/or a harmful fault current that can damage equipment such as a converter or other drive or control equipment connected to the motor. It is thus critical to ensure that the voltage or current source is not suddenly disconnected and that fluctuations in voltage are avoided.

In particular a worst case can arise when going from a full load situation where the voltage is controlled to a nominal value by tap-changing, to a situation where a machine stops or where for some other reason that the power system looses a complete power load. This voltage quality issue can be the limiting factor for the maximum installed load at a given distance, or the maximum distance with a given load and cable.

There are many publications dealing with handling a fault condition in general in an electric network. US2010/0292852, entitled: Wind mill power flow control with dump load and power converter, and assigned to ABB, describes a wind turbine connected to an electrical network. It describes handling faults, and an AC link which further includes a connectable multiphase dump load for blocking during a fault condition on the network the reactive power flow in the AC link, yet providing a reduced transfer of active power. US3611244, entitled: Stabilizing Means For Electric Power Systems, and assigned to Tokyo Shibaura Electric Co., Ltd., describes a means for stabilizing transmission lines, and more particularly a stabilizer for an electric power circuit, in which said stabilizer functions as a temporary load which consumes the electric power of power systems when faults are removed from the system and during the reclosing operation of the system. US3,375,405, entitled "Circuit for removing voltages surges from power lines" and assigned to General Electric Co., describes a circuit for removing voltage surges by momentarily shunting them from the line. EP 0 462 694, entitled "Protective device for temporary system overvoltages", describes a surge arrester and method for grounding temporary over-voltages in a power system such as a 550kV three phase AC system. The apparatus includes a voltage divider having a first varistor block and a second varistor block electrically connected in series.

WO 2012/116742 A1 discloses a system for operating an electrical machine and a method for protecting an operation control unit in such a system. The system comprises an operation control unit, an alternating current cable connecting the machine with the operation control unit and an electrical short-circuit arrangement. This arrangement is connected to terminals of the operation control unit facing the cable and short circuits these terminals based on a detected overvoltage.

US 5 734 256 A discloses an active power line conditioner circuit having a series compensation system arrangement utilizes a transformer-coupled three-phase voltage-source inverter. A conventional metal oxide varistor (MOV) and bypass breaker combination are provided on the line side of the coupling transformer. A solid-state thyristor shorting ("crowbar") switch is provided on the secondary side of the coupling transformer across the outputs of the three-phase voltage-source inverter (VSI). The crowbar switch circuitry utilizes a diode bridge with a thyristor on the dc side of the bridge resulting in the simplification that only one active device need be gated. Crowbar switching logic activates the crowbar switch based on the exceeding of a threshold voltage measured at the dc power source link to the voltage-source inverter. A direct measure of dc source link voltage is employed to determine when to trigger the conduction of the crowbar thyristor switch. The three-phase voltage-source inverter is provided with overcurrent protection circuitry that immediately blocks the active portion of each phase-leg whenever the current exceeds a predetermined level. In an alternative embodiment of the present invention, a thyristor-switched MOV device is provided across the dc source link in parallel with the dc source output and the dc link capacitor for fast switching of slight overcurrents which are passed by the VSI. This allows operation with a dc source voltage close to maximum system ratings, thereby making better utilization of the VSI power electronics.

WO2012/034984 A2 discloses a subsea pressure boosting system feasible for operation at subsea step out lengths above 40 km and by control merely from a dry topside or onshore location. The system is distinctive in that it comprises at least one subsea power step out cable, arranged from a near end at a dry location onshore or topsides to one or more subsea loads such as subsea pumps or subsea compressors at a far end, at the near end at least one source for electric power is connected and the cable is dimensioned for operation at a frequency different from the operation frequency of the connected subsea loads in order to handle the Ferranti effect and electric losses, and at least one passive electric frequency transformer, operatively connected between the subsea step out cable far end and the subsea loads. The transformer is located in a pressure vessel and transforms the operation frequency of the subsea step out cable to a frequency feasible for operation of the connected loads.

An application of electrical power in a subsea setting means that reliability of the circuit is crucial and that on-site maintenance or repair brings with it unacceptably high additional costs and difficulties. However it is necessary to vary the voltage supplied from time to time during operations. When using a variable transformer the topside or onshore voltage control mechanism, such as tap changer control, voltage control mechanisms are often associated with significant delays.

### SUMMARY OF THE INVENTION

The aim of the present invention is to remedy one or more of the above mentioned problems with a device to improve the voltage stability of subsea power distribution arrangements. Advantageous embodiments are described in sub-claims to the independent claims.

According to a first aspect of the invention, a subsea distribution network is provided according to claim 1.

Sudden load reductions in a power supply that includes a long cable leads to over-voltages due to the large capacitive currents flowing in the cable. By adding a temporary load at the load side of the cable, the size of the overvoltage can be reduced. The temporary load device is a fast-acting system, which enables a fast reduction of load over-voltage, which in turn minimizes damage arising due to an electrical fault, and the amount of energy going into a fault. During the time period while the temporary load device is connected, the supply voltage may be changed, reduced, for example by making a tap change in a supply transformer. However, this electromechanical action takes a finite period of time. When, some seconds or so later when the mechanical action of the tap-changer has been completed, the voltage at the load side is sensed and measured to be at the target voltage, in this case a reduced voltage, and the temporary load device is disconnected. In practice it may be the local control unit that receives a signal which it compares and/or calculates to be at a target level, or within a range, and issues a control signal almost instantaneously to disconnect the temporary load.

One advantage of this invention is that the term 'temporary' in the name temporary load device means that it is not designed for permanent connection, but rather connection in the order of a few seconds. Thus the cooling design requirements are small. Secondly it is a very fast acting device. When the temporary load device is arranged as a thyristor based device, for example using anti-parallel thyristors, the turn-on time is extremely short. Thyristors have the capability of having a controllable turn-on, by applying gate current and at the same time having a positive forward voltage. However, for turn-off, the external circuit must force the current to zero. Fortunately a slightly longer turn-off time is not a disadvantage in this application. In the anti-parallel thyristor arrangement, such forcing of current to zero will occur due to the alternating currents. Thus using forced AC currents the thyristors will be turned off within one half-cycle, which, for an AC frequency of eg 60Hz, would be within approximately 8 ms (milliseconds).

### BRIEF DESCRIPTION OF THE DRAWINGS

A more complete understanding of the method and system of the present invention may be had by reference to the following detailed description when taken in conjunction with the accompanying drawings wherein:
Figure 1 shows a schematic diagram of an AC power distribution arrangement including a temporary load device connected in a power distribution bus to a power load according to a first aspect of the invention,
Figure 2a is a schematic diagram for a circuit using the temporary load device invention of Figure 1 according to an embodiment; and Figure 2b is a further embodiment using the temporary load device of Figure 1 showing the circuit comprising in particular at least one second transformer;
Figure 3 is a schematic circuit that includes the temporary load device invention of Figure 1 and in particular shows a plurality of electrical power loads comprised in the power load system according to an embodiment;
Figures 4a, 4b, 4c, 4d each show a schematic circuit for the temporary load device invention of Figure 1, and in particular showing a single stage 4a and a multi-stage arrangement 4b, a star connected arrangement 4c and for a delta connected arrangement 4d of the temporary load device of Figure 1 according to four exemplary embodiments;
Figure 5 is a flowchart for a method for operating the invention of Figure 1 according to a second aspect of the invention;
Figure 6 is a flowchart for a method of operating the invention of Figure 1 and in particular with selection of optional control steps according to another embodiment;
Figure 7 schematically shows a data carrier with computer program code recorded on it for performing the steps of a method according to any of Figures 5 or 6 or 8 according to the second aspect of the invention;
Figure 8 is a flowchart for a method of operating the invention of Figure 1, and in particular for carrying out the method at a time which is known or estimated in advance, according to another embodiment of the second aspect of the invention.

### DESCRIPTION OF THE PREFERRED EMBODIMENTS

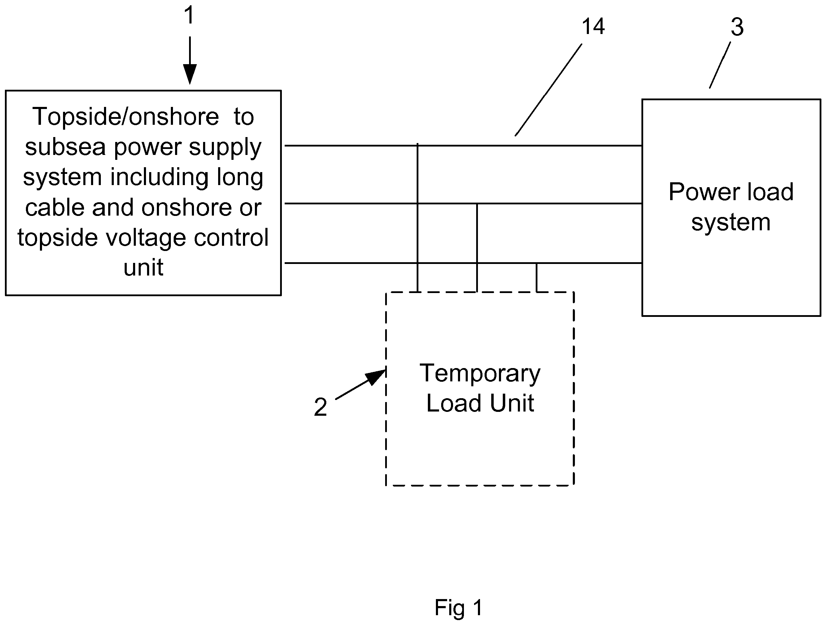

Figure 1 shows a schematic diagram for a temporary load device in an AC circuit arrangement according to a first aspect of the invention. The figure shows a multiphase power supply system 1 connected to a power load, or a power load system 3. Three phases are indicated in the diagram, but the invention is not limited to 3 phase applications, and may be applied to power supply systems with less than, or more than 3 phases. The power supply system can be described to be topside, and it may be located onshore or may be located on a fixed or floating platform. Electrical power transfer over long cables is used to feed distant platforms in the oil & gas industry and/or subsea loads which may be located far away from existing platforms. The installations are used for production, transport, distribution and/or processing of liquid, semi-liquid and/or gaseous petroleum or hydrocarbon substances or mixtures.

The topside or onshore-to-subsea power supply 1 may include a control unit topside for controlling the voltage of the power supply. The power load system 3 is located under the surface of the sea and may be described as the subsea side, and may be mounted on the seabed. A temporary load device 2, indicated in this drawing by a box with dashed (---) lines, is arranged on the subsea side between the power supply 1 and the power load system 3, connected to a subsea distribution bus 14. The temporary load device 2, in this exemplary diagram of this embodiment, is shown to comprise thyristors arranged on each of the three phases shown in the diagram.

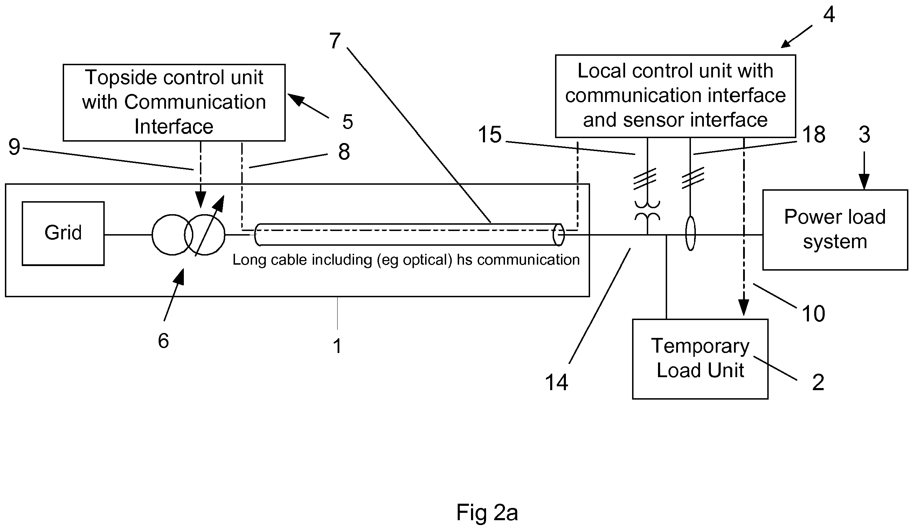

Figure 2a shows a schematic diagram for a circuit using the temporary load device 2 according to Figure 1. The figure shows the power supply system 1 connected to power load system 3. The power supply system 1 is located topside or onshore and the power load system 3 is located subsea. The power supply system is shown to have a transformer 6, which is further indicated to be variable by means of an arrow in the diagram, and a long cable 7 supplying the power load system 3. The power load system 3 may be supplied by more than one long cable. The variable transformer 6 may be located topside (or onshore) at the topside end of at least one long cable 7. In this specification a long cable is many kilometres in length and perhaps between 50 and 100 kilometres long. The long cable includes a high speed (hs) communication channel, such as an optical communication cable 8. A subsea distribution bus 14 connects the power load system 3 to the subsea end of a long cable 7.

Figure 2a also shows a topside control unit 5 on the topside end with a communication interface which is connected via a communication channel 9 to the transformer 6 of the power supply system, as well as to the topside end of the high speed communication channel 8 arranged comprised in the long cable 7. Between the subsea end of the long cable 7 and the power load system 3 a local control unit 4 (a subsea control unit) is arranged which comprises at least two communication interfaces and an interface with sensors such as 15, 18. Local control unit 4 has a communication interface then with the topside devices through the communication channel 8 arranged in the long cable 7. Local control unit 4 also has a communication channel 10 connected to the temporary load device 2. The sensor interface of local control unit 4 is connected to at least one voltage sensor 15 and, preferably at least one current sensor 18 arranged in the distribution bus 14 between the subsea end of the long cable 7 and the power load system 3. Such voltage and/or current sensors may be arranged in different positions to make measurements at different points in the circuit, such as on a high voltage side or a low voltage side of a transformer. Current and/or voltage sensors may also be located on the high voltage and/or the low voltage sides of the main transformer 6.

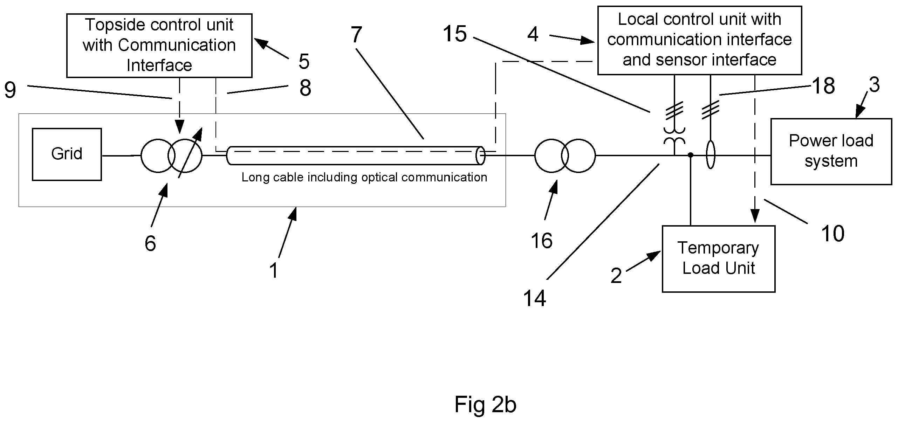

Readings from such voltage and/or current sensors in the subsea distribution may be coupled to the Topside or Onshore Control unit 5 allowing for high speed data manipulation for extracting information about equipment and/or system condition and performance. The topside control unit 5 may be provided with a subsea communication interface, a control network interface in for example local (subsea) control unit 4, and a control interface for power supply control for taking control action based on condition estimations. The Onshore control unit is further connected to the Topside power supply (onshore / platform) where virtually any type of AC power supply may be used. The power supply control can be adjusted, eg using a variable transformer 6, based on the system condition evaluation in the topside/onshore control unit 5. As further illustrated in Figures 2a, 2b a High-Speed communication link extends from the topside / onshore Control unit and topside Power Supply respectively to the Subsea portion of the system. The High-Speed communication link can comprise virtually any broadband link, including, for example, an optical cable. Both the High-Speed Communication Link and the AC power supply 1 may be arranged to comprise a single long subsea cable with integrated optical communication and electrical transmission.

An example of a system implementation as shown schematically in Figure 2a may be operated according to another aspect of the invention in a sequence of steps as follows:
1. An overvoltage condition is detected in a local control unit 4 where measurements for at least voltage, but also possibly current, are used to detect or estimate the development of an overvoltage condition;
2. A signal (OV) is sent to the temporary load device 2 in order to connect the temporary load device as a type of protection device. In cases where the temporary load device has several connection options or control options, an evaluation of the most suitable connection state is also performed in the processing unit 4. The temporary load is connected, in the only, or most suitable, or optimum way, which then leads to a reduced voltage at the load side (subsea side);
3. A signal is sent from the local, load side control unit 4 to the power supply side processing unit 5 topside that a fast reduction of topside/onshore voltage is required. This signal may be sent together with information or a signal that the temporary load 2 is now active. The sending of the fast voltage reduction required signal is performed at a similar timing as the previous item (2. above).
4. The topside or power supply side processing unit 5 sends control signals to the tap changing or variable transformer 6 which switches by tap changing making an appropriate reduction in onshore or topside voltage at the transformer. The tap changing action takes a non-negligible amount of time. The time period may be of the order of a few or several seconds.
5. The tap-changer control reduces the topside or onshore voltage as well as the load side voltage. The reduced load side voltage is seen by the temporary load, in other words, detected by sensors such as 15, 18 interfaced with local control unit 4. The reduced voltage at the subsea load may be determined by the local control unit 4 as a measured voltage on the subsea side that matches a predetermined setpoint, or is within a predetermined range, for a target voltage, which in this example is a reduced voltage. When the voltage has been matched to a target voltage or to be within an accepted range, the local control unit 4 then sends a signal to temporary load 2 and disconnection of the temporary load 2 is performed in the only, or most suitable, or optimum way, at an appropriate voltage level or a target voltage, which in this example is a reduced voltage.

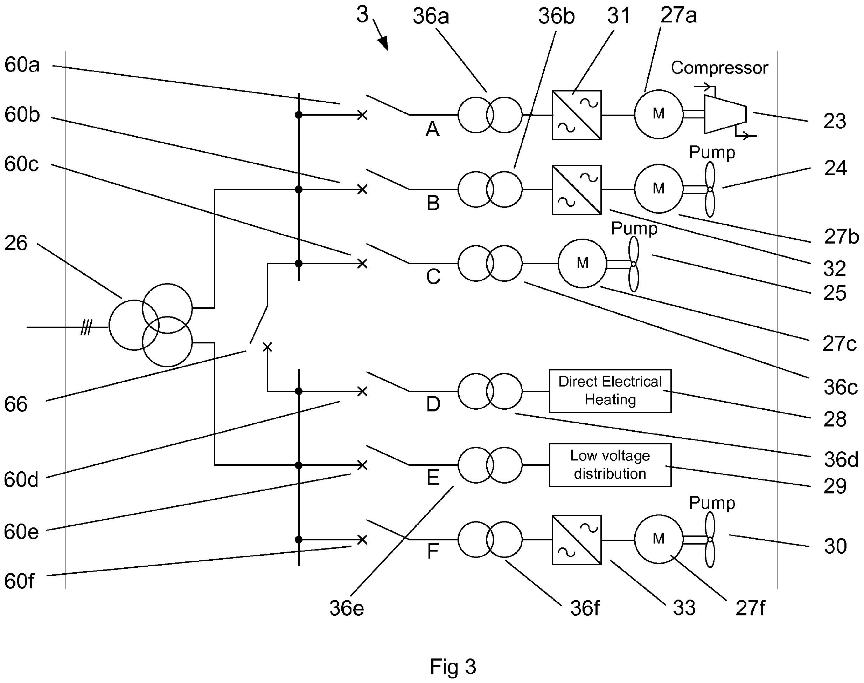

A plurality of transformers may be installed subsea. These may comprise one or more main transformers, auxiliary transformers etc. handling power supply to different loads in the power load system 3. Figure 3 shows a plurality of power loads comprised in the power load system 3 according to an exemplary embodiment. The figure shows the power load system to comprise a main transformer 26 and a distribution bus or network comprising at least a first part comprising a first group of loads (27a-c, 23-25), and a second group of loads (28, 29, 27f, 30) that may be isolated separately from the power supply. For example a circuit breaker or switch or isolator 66 may be used to connect or disconnect one or more distribution bays (A-C) in the first part of the distribution network from bays (D-F) in the second part of the distribution network. Six separate buses or bays A-F are shown but the power load system 3 may comprise more bays or isolatable parts; or less bays or isolatable parts.

The first bay A in the top part of the distribution network at the top of the diagram includes switch, breaker or isolator 60a, a transformer 36a, a power converter or variable speed converter 31 supplying an electric motor 27a, which drives a compressor 23. In the second bay B a second transformer 36b connected to main transformer 26 via a circuit breaker or isolator 60b powers a second power converter 32 which drives an electric motor 27b which drives a pump 24. In the third bay C there is an isolator or circuit breaker 60c, a transformer 36c directly powering the electric motor 27c without a power converter, which direct on-line motor 27c drives a pump 25. One or more of the electric motors 27a,b,c,f may an induction motor.

Similarly, in the first bay D of the second isolatable part of the distribution network in the lower part of the diagram a switch, breaker or isolator 60d is shown, and a distribution transformer 36d which is connected to a Direct Electrical Heating apparatus or system 28. The second bay E of that group includes an isolator or a switch or circuit breaker 60e, a distribution transformer 36e and a Low Voltage distribution component, apparatus, bus or network 29. The third bay F is shown to include a circuit breaker, switch or isolator 60f, a distribution transformer 36f and a power converter or variable speed drive 33 driving a motor 27f and a pump 30.

When connecting a load with a transformer, such as a main transformer 26 or any of transformers 36a-f, there is always an inrush current or magnetisation effect that normally causes oscillations in the voltage in the power distribution system. The temporary load unit 2 can be connected during the inrush or magnetisation stage to prevent the voltage oscillations or other transients from reaching the power load system 3. When more than one transformer is used in a power load system then there can be a series of stabilisation or magnetisation operations.

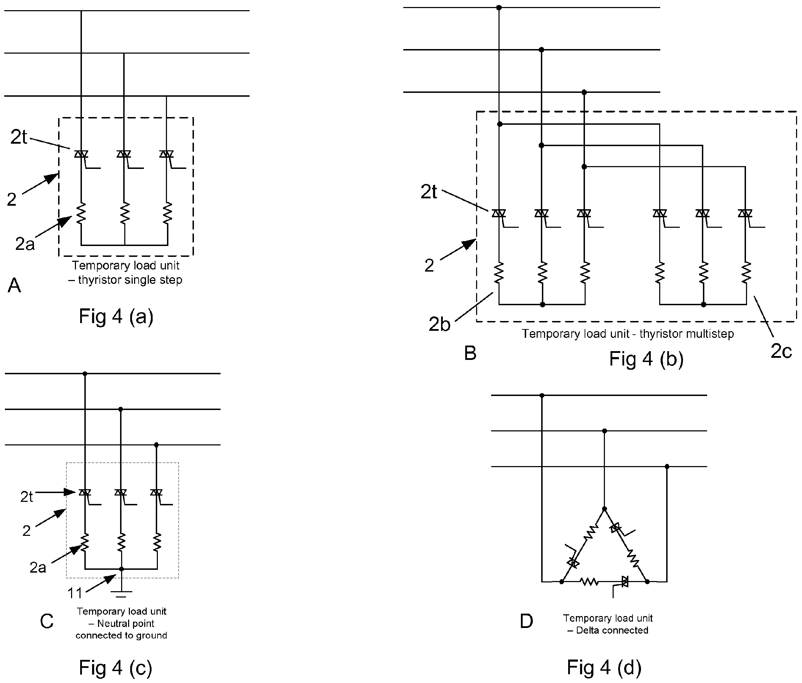

Figures 4a, 4b, 4c and 4d show three embodiments of the temporary load device. Figure 4a shows a first implementation (A) that uses a star connected thyristor-controlled passive load. Although not shown in the figure 4a, a delta connected configuration is equally applicable, as shown D in figure 4d. The passive load element (2a) can be of a resistive or an inductive type, or a combination of both. The optimal combination can be found for a specific case by a load unit cost analysis. This may involve calculating loads and making comparisons, as temporary inductive loads will be more expensive than temporary resistive loads, while at the same time, inductive loads are more efficient for bringing down the voltage. Figure 4b shows another exemplary implementation which uses a multiple of load steps (B), a single stage thyristor 2b and a two-stage thyristor device 2c. Figure 4c shows a star connected arrangement where the temporary load device C may comprise thyristors 2t and passive load elements 2a. The diagram shows the starpoint 11 is connected to ground. An advantage of the star connected embodiment of Fig 4c is that it limits the voltage to ground.

Once again, the passive load elements in any stage may be of a resistive or an inductive type. The temporary load unit may comprise a combination of passive elements such as resistors, reactors and capacitors.

The temporary load unit might also be connected to the power connection link or bus, shown 14 in Fig 2a, 2b, by means of a circuit breaker. This may be a mechanical switch such as a no-load breaker, a contactor or a circuit breaker. It would also be possible to use a combination of both passive elements and a mechanical switch in order to provide protection for the temporary load device.

In addition, the temporary load unit should itself also have some sort of protective feature, such as to not go above the designed energy level. This may be expressed in the form of a maximum connectable time period in eg minutes or seconds for which the temporary load device may be connected to equipment configured in different energy ratings. With planned operations, such as a magnetisation of a transformer, the slow response time of a circuit breaker is not a disadvantage. A circuit breaker is useful to isolate the temporary load unit but slow in operation, which is often a disadvantage when handling unplanned occurrences. Connecting a temporary load unit by means of a circuit breaker is also advantageous when more than one temporary load unit is arranged in the system so as to provide for redundant capacity or when operating a subsea distribution system in different supply or energy rating configurations.

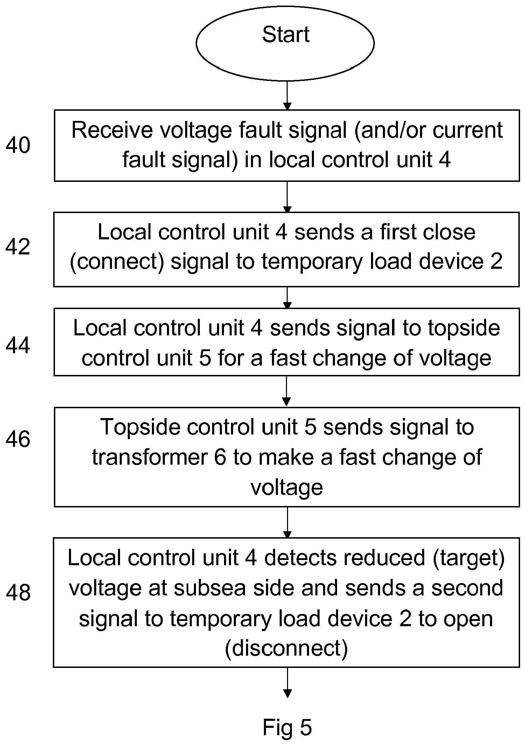

The flowchart of Figure 5 shows a series of steps comprised in a method according to another aspect of the invention. The figure shows:
40 Receive a voltage or current fault signal in local control unit 4,
42 Local control unit 4 sends a close (connect) signal to the temporary load device 2,
44 Local control unit 4 sends a signal to topside control unit 5 to request a fast change of voltage,
46 Topside control unit 5 sends a signal to transformer 6 to make a fast voltage change,
48 Local control unit 4 detects a reduced (target) or within range voltage at the subsea side and sends a signal to temporary load device 2 to open (disconnect).

As previously mentioned, sudden load reductions in a power supply fed by a long cable normally lead to over-voltages due to the large capacitive currents flowing in the cable, also known as Ferranti effect. For example if a fault occurs in one or more loads, for example in the complete power load system 3, or in the compressor 23, or a pump 24, 25, 30 and self-protection is activated by disconnection of the complete power load system or the compressor or pump etc. as a result of the fault. As well, a problem in a process for extraction or production of oil or gas substances may require quick disconnection.

In case of a quick disconnection then loads such as power converters to electric motors for pumps and compressors, and also direct on line motors, or auxiliary power supply, direct electric heating etc., may need to be disconnected quickly for protection of the device; or because of a problem in an extraction process, production process, distribution process and so on. Thus in the case of a load drop the temporary load device may be connected during a period of voltage adjustment as described and in particular in reference to Figure 5. The fast turn-on time of thyristor devices is an advantage in this application. By connecting and closing a temporary load at the load side of the cable, as described here, the size and duration of the resulting overvoltage can be reduced. In case of an over-voltage, the voltage supplied to the power load system 3 is reduced to within an acceptable range where loads can operate in a normal manner for a short time by means of connecting the temporary load, and during the short period of time during which the temporary load device is connected, the effect of the over-voltage can be removed by adjusting the voltage on the topside with, for example, a tap-changer control action.

The local or subsea control unit 4 may be comprised as a control and protection unit, which may include a relay. One of more of the above steps such as the steps of Figure 5, 6 or 8 may be carried out by another unit. The other unit may comprise a circuit with an analogue part, such as a circuit including a relay. A circuit involving a digital process may also be used to provide the logic and the in/out signals to carry out the above method.

The temporary load device 2 is a fast-acting system, which enables a fast reduction of load over-voltage. During the time period while the temporary load device is connected, the supply voltage may be changed, reduced, for example by making a tap change in a supply transformer such as transformer 6. This electromechanical action takes a finite period of time. When some seconds or so later the voltage at the load side is sensed and measured to be at the target voltage or within an acceptable voltage range, in this case a reduced voltage, then the temporary load device is disconnected, and the power supply is once again operating at a steady voltage.

The advantage of using this temporary load device is that the Ferranti effect in the long cable, producing a significant or damaging over-voltage, is avoided. Normally when a load at the end of a long cable is reduced, or, with even more serious effects, if a load is rejected or otherwise lost completely, then the capacitive effect of the long cable causes a serious over-voltages at the load end. The use of the temporary load device prevents a reduction in load from being experienced at the load-end of the cable, as seen from the cable side.

The above method may be carried out with many variations. For example at step 40 the severity of the voltage quality condition such as an overvoltage, the detected error condition may be compared to predetermined values and conditions, eg in local control unit 4, and the severity of the fault assigned a state such as high/low but within bounds; high/low outside of bounds; emergency or shutdown action. The signal sent to processor unit 5 and/or other control devices depends in part on the assigned state. Thus -high/low but within bounds- may result in a minor voltage change; -high/low outside of bounds- may result in a major voltage change or in a shutdown within a short time; and emergency or shutdown will normally result in a shutdown as soon as possible.

In addition the state of the distribution system may be assessed to assign a priority to one or more of a plurality of loads supplied by the power supply. For example the local control unit 4 may determine, based on a pre-configuration of the system, that according to a certain priority setting, one specific machine should be shut down, but the remainder would carry on without change.

Other variations include, for instance, that step 44, sending a signal to topside processor unit 5 calling for a fast change of voltage, this signal may be sent at the same time as step 42, or even a short time before, the signal 44 is sent to Topside control unit 5 topside or onshore.

Disconnection of the temporary load device 2 may be carried out in stages when a multi-stage device such as B in Fig 4(b) is used.

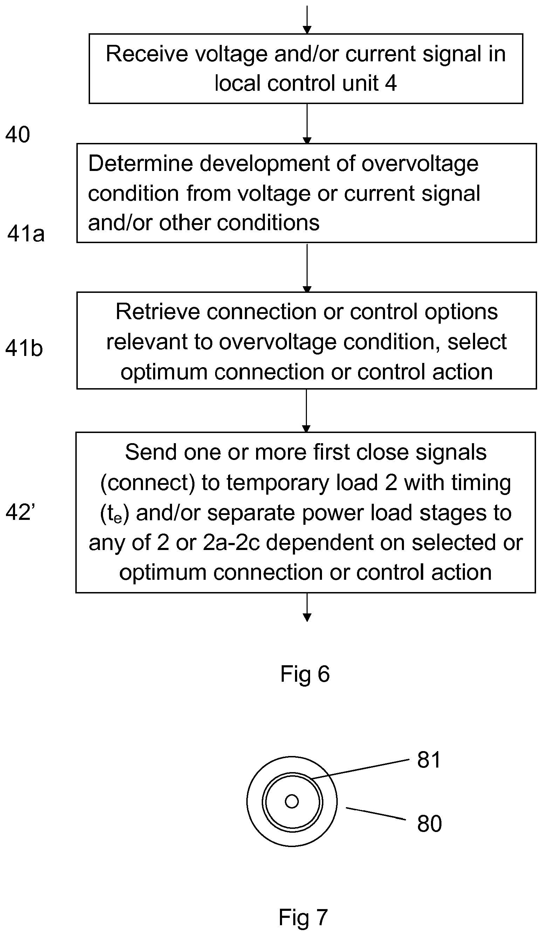

The flowchart of Figure 6 shows a method according to another embodiment of the invention. As mentioned in connection with Figures 2a, 2b where the temporary load device has several connection/control options, an evaluation of the most suitable connection state may also be performed in the processing unit 4. Thus Figure 6 shows:
40 Receive voltage fault signal in local control unit 4,
41a Determine development of overvoltage condition from voltage or current fault signal and/or other conditions
41b Retrieve connection or control options relevant to overvoltage condition, select optimum connection or control action
42' Send one or more close (connect) signals to temporary load 2 with timing tₑ and/or separate power load stages to any of 2 or 2b-2c in a multistage temporary load device B dependent on a selected optimum connection or control action.

The above method of determining a type of fault, comprising retrieving and examining the fault ie the voltage error condition, together with other conditions if applicable, and selecting a connection or control action, takes place in the local control unit 4. Local control unit 4 then sends 42' one or more close signals to the temporary load device to close (connect) in one or more stages at one or more time intervals. The fault determination may also be signalled from a control unit such as control unit 5 located topside or even onshore.

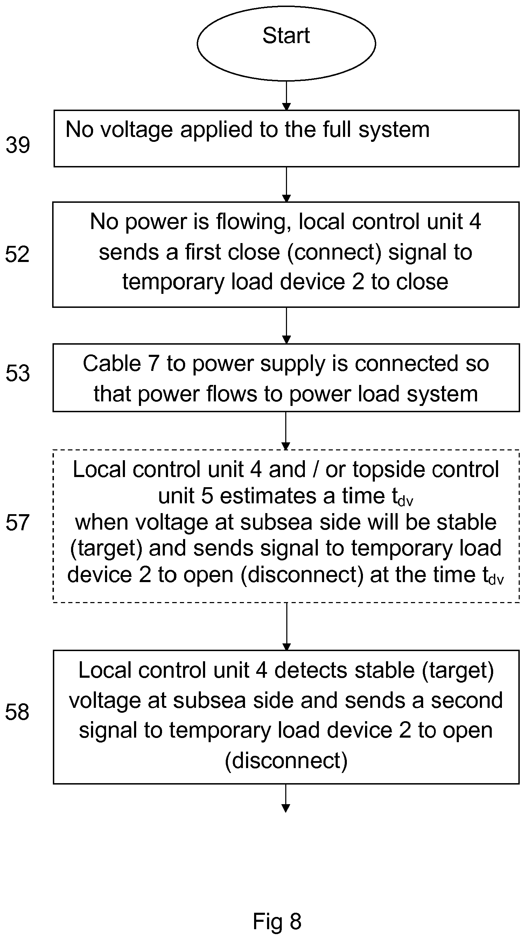

The flowchart of Figure 8 shows a method for carrying out a planned or expected power supply configuration change according to another embodiment of the invention. The temporary load may be used to damp a known or planned transient in which voltage oscillations are caused by an inrush current to the cable 7 when certain loads are connected.

The energizing of the cable 7 may ordinarily have the following sequence:
1. No voltage is applied to the full system initially
2. A temporary load device 2 is connected (without any power actually going through)
3. The cable is connected to the power supply system 1
4. The voltages during the energisation of the cable are stabilized more quickly due to the damping effect of the temporary load device 2. This can improve the startup time; or, if the system has only been disconnected temporarily, for example from topside, then a start-up of operations can be performed faster.

The method steps for a planned event of energising the power supply cable are shown in the flowchart of Figure 8. Figure 8 shows:
39 No voltage is applied to the system;
52 No power is flowing, local control unit 4 sends a signal the temporary load device to close (connect;
53 Cable 7 to power supply is connected so that power flows to the power load system 3;
57 (Optional) Local control unit 4 and / or 5 estimates a time t_{dv} at which voltage at subsea side will be stable (target) and sends a signal to the temporary load device 2 to open (disconnect) at the estimated time t_{dv};
58 Local control unit 4 detects stable (target) voltage at the subsea side and sends a signal to temporary load device 2 to open (disconnect).

There is also the case where a subsea transformer is connected and there will be inrush currents creating highly distorted waveforms. A temporary load device 2 can also be applied in such case to stabilize the voltages more quickly.

Inrush currents will occur for example when the at least one long cable 7 is energised which may include energisation or magnetisation of the main transformer at the subsea end, such as transformer 16 (Fig 2b); or, transformer 26 (Fig 2a), if there is no transformer 16. This event can occur at an estimated time tₑ, when one or more subsea transformers 36a-f are being connected and magnetised, or when one or more electric motors 27a-f are being stabilised. During such planned operations a sequence may be followed including:
- connecting a device or load (transformer, motor and so on) at a planned/expected time,
- connecting the temporary load device 2 at the planned/expected time, then
- disconnecting the temporary load device 2 when the voltage condition is estimated, or measured, to be within voltage and/or current tolerance and stabilised, followed by
- connecting a second device or load and so on.

Thus when a voltage or current measurement made on the subsea side is matched to a setpoint, or to be within a predetermined range in the local control unit 4, then a signal may be sent from local control unit 4 for the temporary load device 2 to open and disconnect. For example when the voltage has been detected to have increased to a target value or to be within a range of predetermined values.

### The method

Preferably the AC circuit arrangement with the multiphase power supply system 1 connected to power load system 3 is controlled and monitored using a control system. This may be a Power Management System (PMS) of the type supplied by ABB, or may be another kind of control system such as a Distributed Control System or a version of the 800xA Control System, also supplied by ABB.

The local control unit 4 on the subsea side may be a stand-alone device on the subsea side. Local control unit 4 may be included in a power connection link or bus 14 arranged between the subsea end of long cable 7 and the power load 3. The local control unit may also be included within an enclosure together with another device, for example included in an enclosure containing the temporary load device 2 or a current sink, or in an enclosure containing a power load device or one part of the power load 3. Such a control unit could be placed in a pressure compensated tank, so that the full ambient pressure of the surrounding sea water would be exerted on control unit components. Depending on the characteristics of the components, some may be enclosed in one or more enclosures maintained at around 1 atmosphere internal pressure.

The methods of the invention such as those method steps shown in Figures 5, 6 and/or 8 may, as previously described, be carried out by means of one or more computer programs comprising computer program code or software portions running on a computer or a processor. Such a processor may be arranged with a memory storage unit of a process system control unit, control unit, relay based control and protection unit, programmable control unit (PLC), motor control unit, or other motor control system part thereof. A part of the program or software carrying out the methods may be stored in a processor as above, but also in a ROM, RAM, PROM, EPROM or EEPROM chip or similar memory means.

The program in part or in whole may also be stored on, or in, other suitable non-transitory computer readable medium such as a magnetic disk, magneto-optical memory storage means, and/or in volatile memory, in flash memory, as firmware, stored on a data server or on one or more arrays of data servers or even on removable memory media such as flash memories, hard drives etc.. This computer program code may also be provided on one or more data carriers or non-transitory memory media which perform the functionality of the present invention when the program code thereon is loaded into a processor or control unit. One such data carrier 80 with computer program code 81, in the form of a CD ROM disc, is schematically shown in Figure 7. Data used by the above computer program may be accessed by means of any of: OPC, OPC servers, an Object Request Broker such as COM, DCOM or CORBA, a web service.

The embodiments illustrated and discussed in this specification are only intended to teach those skilled in the art the best way known to the inventors to make and use the invention. The person skilled in the art realizes that the present invention is by no means limited to the examples described. On the contrary, many modifications and variations to the temporary load device, method of use and system comprising the device are possible within the scope of the appended claims.

## Claims

1. A subsea distribution network comprising at least one subsea distribution bus (14) connecting a power load system (3) to electrical power supplied by an AC power supply (1) by means of at least one long cable (7), the subsea distribution bus (14) connecting the power load system (3) to a subsea end of the long cable (7), **characterized in that** said at least one subsea distribution bus (14) comprises a local control unit (4), and a temporary load device (2),
wherein the local control unit (4) is arranged to receive a voltage or current fault signal and send a first signal to the temporary load device (2), and wherein the local control unit (4) is arranged to detect a reduced or within range voltage at the subsea side and send a second signal to the temporary load device (2),
wherein said temporary load device (2) is arranged, upon receipt of the first signal from the local control unit (4), to close (42, 52, 42') and reduce the voltage to the power load system (3), and, on receipt of the second signal (48, 58) from the local control unit (4) is arranged to open and disconnect said temporary load device (2) from the subsea distribution bus (14) having avoided or reduced an overvoltage at the power load system (3).

2. A subsea distribution network according to claim 1, **characterized in that** said temporary load device (2) comprises any device from the group of: thyristor-based crowbar; diode bridge; diode bridge with active switch.

3. A method for controlling a temporary load device (2) of a subsea distribution network comprising a subsea distribution bus (14), the temporary load device (2) being arranged connectable to the subsea distribution bus (14) connecting a power load system (3) to electrical power supplied by an AC power supply (1) by means of at least one long cable (7), the subsea distribution bus (14) connecting the power load system (3) to a subsea end of the long cable (7), **characterized in that** the subsea distribution bus (14) comprises a local control unit (4), wherein the local control unit (4) is arranged to receive a current fault signal and send a first signal to the temporary load device (2), and wherein the local control unit (4) is arranged to detect a reduced or within range voltage at the subsea side and send a second signal to the temporary load device (2), and **in that** said temporary load device (2) is arranged, upon receipt of the first signal from the local control unit (4) for closing (42, 52, 42') and reducing the voltage to the power load system (3), and, on receipt of the second signal (48, 58), from the local control unit (4), is arranged for opening and disconnecting said temporary load device (2) from the subsea distribution bus (14) having avoided or reduced an overvoltage at the power load system (3).

4. A method according to claim 3, **characterised in that** said temporary load device (2) comprises any device from the group of: thyristor-based crowbar; diode bridge; diode bridge with active switch, and by being arranged for the further step of closing in one or more power load stages (42', 2b-2c).

5. A method according to claim 3, **characterised by** receiving in the local control unit (4) a measurement or estimate of voltage error condition and sending the first close signal (42, 42', 52) to said temporary load device (2).

6. A method according to claim 3, **characterised by** receiving in the local control unit (4) a measurement or estimate of a planned change or development in a voltage condition, or of a current condition, and sending the first close signal and closing (52) said temporary load device (2).

7. A method according to claim 3, **characterised by** receiving in the local control unit (4) a measurement or estimate of a load drop and sending the first close signal and closing (52) said temporary load device (2).

8. A method according to claim 3, **characterised by** receiving in the local control unit (4) a signal for an magnetization of at least one electric motor (27a-d), or at least one other load (28, 29), and sending at least one first close signal (42') to said temporary load device (2).

9. A method according to any one of claims 3-8, **characterised by** receiving in the local control unit (4) a measurement or estimate of a voltage condition which is matched to a setpoint or to be within a range, and sending a second signal to the temporary load device (2) to disconnect (48, 58) or open.

10. A method according to claim 5, **characterised by** receiving in the local control unit (4) a measurement or estimate of a voltage condition which is matched to a setpoint or to be within a range, and selecting (41b) an optimum connection or control action dependent on any of: voltage error condition signal, other conditions detected or estimated in the circuit.

11. A method according to claim 5, **characterised by** receiving a signal (40) of the error condition of voltage and triggering a control action which comprises sending the first close signal to the temporary load device (2), which signal may be any from the group of: request the temporary load device to close (42); request the temporary load device to close in power load stages (42'); request the temporary load device to close at at least one estimated time tₑ (52).

12. A method according to claim 5, **characterised by** receiving a signal of the error condition of voltage and triggering a control action comprising sending a signal to a transformer (6) or transformer control unit (5) requesting at least one voltage control action (44, 46).

13. A method according to claim 5, **characterised by** receiving a signal of an estimated error condition of voltage at an estimated time (tₑ) and triggering a control action comprising sending a signal to a transformer (6) or transformer control unit (5) requesting a voltage control action (44, 46) at the estimated time (tₑ).

14. A method according to any one of claims 3-13, **characterised by** receiving in the local control unit (4) a measurement of a voltage, or a current measurement which is matched to a setpoint or to be within a range, and sending the second signal to said temporary load device to open and disconnect (48, 58).

15. A method according to any one of claims 3-13, **characterised in that** the temporary load device (2) is connected to more than one power load (26, 27a-f, 23-25, 28, 29, 30) and by the further step of requesting the temporary load device to close, respectively open (48, 58) one or more times upon connection or disconnection of one or more transformers (26, 36a-f).

16. A computer program product stored on a non-transitory computer readable medium which when loaded into a processor or control unit controls a temporary load device (2) of a subsea distribution network comprising a subsea distribution bus (14), the temporary load device (2) being arranged connectable to a subsea distribution bus (14) connecting a power load (3) to electrical power supplied by an AC power supply (1) by means of at least one long cable (7), the subsea distribution bus (14) connecting the power load system (3) to a subsea end of the long cable (7), the temporary load device (2) being arranged controlled by a local control unit (4), said program comprising software code portions or computer code adapted to cause a computer or processor to carry out the steps of: upon receiving a voltage or current fault signal, sending a first signal from the local control unit (4) to said temporary load device (2) for closing said temporary load device and reducing the voltage to the electrical load, and, upon detecting a reduced or within range voltage at the subsea side, and sending a second signal (48, 58) from the local control unit (4) to said temporary load device (2) for opening and disconnecting said temporary load device from the subsea distribution bus (14) having avoided or reduced an overvoltage at the power load system (3).

## Patentansprüche

1. Unterwasserverteilungsnetz, das wenigstens einen Unterwasserverteilungsbus (14) umfasst, der ein Leistungslastsystem (3) mit elektrischer Leistung verbindet, die mittels wenigstens eines langen Kabels (7) durch eine Wechselstromleistungsversorgung (1) zugeführt wird, wobei der Unterwasserverteilungsbus (14) das Leistungslastsystem (3) mit einem Unterwasserende des langen Kabels (7) verbindet, **dadurch gekennzeichnet, dass** der wenigstens eine Unterwasserverteilungsbus (14) eine lokale Steuereinheit (4) und eine Vorrichtung (2) vorübergehender Last umfasst,
wobei die lokale Steuereinheit (4) dafür ausgelegt ist, ein Spannungs- oder Stromstörungssignal zu empfangen und ein erstes Signal an die Vorrichtung (2) vorübergehender Last zu senden, und wobei die lokale Steuereinheit (4) dafür ausgelegt ist, eine verringerte oder eine innerhalb eines Bereichs liegende Spannung auf der Unterwasserseite zu detektieren und ein zweites Signal an die Vorrichtung (2) vorübergehender Last zu senden, wobei die Vorrichtung (2) vorübergehender Last dafür ausgelegt ist, bei Empfang des ersten Signals von der lokalen Steuereinheit (4) zu schließen (42, 52, 42') und die Spannung zu dem Leistungslastsystem (3) zu verringern, und dafür ausgelegt ist, beim Empfang des zweiten Signals (48, 58) von der lokalen Steuereinheit (4) zu öffnen und die Vorrichtung (2) vorübergehender Last von dem Unterwasserverteilungsbus (14), bei dem eine Überspannung bei dem Leistungslastsystem (3) vermieden oder verringert worden ist, zu trennen.

2. Unterwasserverteilungsnetz nach Anspruch 1, **dadurch gekennzeichnet, dass** die Vorrichtung (2) vorübergehender Last irgendeine Vorrichtung aus der folgenden Gruppe umfasst: eine Thyristor-gestützte aufgesetzte Gleichrichterbrücke; eine Diodenbrücke; eine Diodenbrücke mit aktivem Schalter.

3. Verfahren zum Steuern einer Vorrichtung (2) vorübergehender Last eines Unterwasserverteilungsnetzes, das einen Unterwasserverteilungsbus (14) umfasst, wobei die Vorrichtung (2) vorübergehender Last dafür ausgelegt ist, mit dem Unterwasserverteilungsbus (14), der ein Leistungslastsystem (3) mit elektrischer Leistung verbindet, die mittels wenigstens eines langen Kabels (7) durch eine Wechselstromleistungsversorgung (1) zugeführt wird, verbunden zu werden, wobei der Unterwasserverteilungsbus (14) das Leistungslastsystem (3) mit einem Unterwasserende des langen Kabels (7) verbindet, **dadurch gekennzeichnet, dass** der Unterwasserverteilungsbus (14) eine lokale Steuereinheit (4) umfasst, wobei die lokale Steuereinheit (4) dafür ausgelegt ist, ein Stromstörungssignal zu empfangen und ein erstes Signal an die Vorrichtung (2) vorübergehender Last zu senden, und wobei die lokale Steuereinheit (4) dafür ausgelegt ist, eine verringerte oder innerhalb eines Bereichs liegende Spannung auf der Unterwasserseite zu detektieren und ein zweites Signal an die Vorrichtung (2) vorübergehender Last zu senden, und wobei die Vorrichtung (2) vorübergehender Last dafür ausgelegt ist, bei Empfang des ersten Signals von der lokalen Steuereinheit (4) zu schließen (42, 52, 42') und die Spannung zu dem Leistungslastsystem (3) zu verringern, und dafür ausgelegt ist, beim Empfang des zweiten Signals (48, 58) von der lokalen Steuereinheit (4) zu öffnen und die Vorrichtung (2) vorübergehender Last von dem Unterwasserverteilungsbus (14), bei dem eine Überspannung des Leistungslastsystems (3) vermieden oder verringert worden ist, zu trennen.

4. Verfahren nach Anspruch 3, **dadurch gekennzeichnet, dass** die Vorrichtung (2) vorübergehender Last irgendeine Vorrichtung aus der folgenden Gruppe umfasst: eine Thyristor-gestützte aufgesetzte Gleichrichterbrücke; eine Diodenbrücke; eine Diodenbrücke mit aktivem Schalter, und dadurch, dass es für den weiteren Schritt des Schließens in einer oder mehreren Leistungslastphasen (42', 2b-2c) ausgelegt ist.

5. Verfahren nach Anspruch 3, **gekennzeichnet durch** das Empfangen eines Messwerts oder Schätzwerts des Spannungsfehlerzustands in der lokalen Steuereinheit (4) und durch das Senden des ersten Schließsignals (42, 42', 52) an die Vorrichtung (2) vorübergehender Last.

6. Verfahren nach Anspruch 3, **gekennzeichnet durch** das Empfangen eines Messwerts oder Schätzwerts einer geplanten Änderung oder Entwicklung in einem Spannungszustand oder in einem Stromzustand in der lokalen Steuereinheit (4) und durch das Senden des ersten Schließsignals und durch das Schließen (52) der vorübergehenden Lastvorrichtung (2).

7. Verfahren nach Anspruch 3, **gekennzeichnet durch** das Empfangen eines Messwerts oder Schätzwerts eines Lastabfalls in der lokalen Steuereinheit (4), durch das Senden des ersten Schließsignals und durch das Schließen (52) der Vorrichtung (2) vorübergehender Last.

8. Verfahren nach Anspruch 3, **gekennzeichnet durch** das Empfangen eines Signals für eine Magnetisierung wenigstens eines Elektromotors (27a-d) oder wenigstens einer anderen Last (28, 29) in der lokalen Steuereinheit (4) und durch das Senden wenigstens eines ersten Schließsignals (42') an die Vorrichtung (2) vorübergehender Last.

9. Verfahren nach einem der Ansprüche 3-8, **gekennzeichnet durch** das Empfangen eines Messwerts oder Schätzwerts eines Spannungszustands, der an einen Sollwert angepasst ist oder innerhalb eines Bereichs liegt, in der lokalen Steuereinheit (4) und durch das Senden eines zweiten Signals an die Vorrichtung (2) vorübergehender Last, um sie zu trennen (48, 58) oder zu öffnen.

10. Verfahren nach Anspruch 5, **gekennzeichnet durch** das Empfangen eines Messwerts oder Schätzwerts eines Spannungszustands, der an einen Sollwert angepasst ist oder innerhalb eines Bereichs liegt, in der lokalen Steuereinheit (4) und durch das Auswählen (41b) einer optimalen Verbindungs- oder Steueraktion in Abhängigkeit von einem Spannungsfehlerzustandssignal oder anderen detektierten oder geschätzten Zuständen in der Schaltung.

11. Verfahren nach Anspruch 5, **gekennzeichnet durch** das Empfangen eines Signals (40) des Fehlerzustands der Spannung und durch das Auslösen einer Steueraktion, die das Senden des ersten Schließsignals an die Vorrichtung (2) vorübergehender Last umfasst, wobei das Signal irgendeines aus der folgenden Gruppe sein kann: eine Anforderung der Vorrichtung vorübergehender Last, zu schließen (42); eine Anforderung der Vorrichtung vorübergehender Last, in Leistungslastphasen zu schließen (42'); eine Anforderung der Vorrichtung vorübergehender Last, wenigstens zu einem geschätzten Zeitpunkt tₑ zu schließen (52).

12. Verfahren nach Anspruch 5, **gekennzeichnet durch** das Empfangen eines Signals des Fehlerzustands der Spannung und durch das Auslösen einer Steueraktion, die das Senden eines Signals, das wenigstens eine Spannungssteueraktion (44, 46) anfordert, an einen Transformator (6) oder an eine Transformatorsteuereinheit (5) umfasst.

13. Verfahren nach Anspruch 5, **gekennzeichnet durch** das Empfangen eines Signals eines geschätzten Fehlerzustands einer Spannung zu einem geschätzten Zeitpunkt (tₑ) und durch das Auslösen einer Steueraktion, die das Senden eines Signals, das eine Spannungssteueraktion (44, 46) anfordert, an einen Transformator (6) oder an eine Transformatorsteuereinheit (5) zu dem geschätzten Zeitpunkt (tₑ) umfasst.

14. Verfahren nach einem der Ansprüche 3-13, **gekennzeichnet durch** das Empfangen eines Messwerts einer Spannung oder eines Strommesswerts, der an einen Sollwert angepasst ist oder innerhalb eines Bereichs liegt, in der lokalen Steuereinheit (4) und durch das Senden des zweiten Signals an die Vorrichtung vorübergehender Last, um sie zu öffnen und zu trennen (48, 58).

15. Verfahren nach einem der Ansprüche 3-13, **dadurch gekennzeichnet, dass** die Vorrichtung (2) vorübergehender Last mit mehr als einer Leistungslast (26, 27a-f, 23-25, 28, 29, 30) verbunden ist, und durch den weiteren Schritt des Anforderns der Vorrichtung vorübergehender Last, bei Verbindung oder Trennung eines oder mehrerer Transformatoren (26, 36a-f) einmal oder mehrmals zu schließen bzw. zu öffnen (48, 58).

16. Computerprogrammprodukt, das in einem nichttransitorischen computerlesbaren Medium gespeichert ist, wobei das Computerprogrammprodukt, wenn es in einen Prozessor oder in eine Steuereinheit geladen ist, eine Vorrichtung (2) vorübergehender Last eines Unterwasserverteilungsnetzes, das einen Unterwasserverteilungsbus (14) umfasst, steuert, wobei die Vorrichtung (2) vorübergehender Last dafür ausgelegt ist, mit einem Unterwasserverteilungsbus (14), der eine Leistungslast (3) mit elektrischer Leistung, die mittels wenigstens eines langen Kabels (7) durch eine Wechselstromleistungsversorgung (1) zugeführt wird, verbindet, verbunden zu werden, wobei der Unterwasserverteilungsbus (14) das Leistungslastsystem (3) mit einem Unterwasserende des langen Kabels (7) verbindet, wobei die Vorrichtung (2) vorübergehender Last dafür ausgelegt ist, durch eine lokale Steuereinheit (4) gesteuert zu werden, wobei das Programm Softwarecodeabschnitte, die dafür ausgelegt sind, oder Computercode, der dafür ausgelegt ist, zu veranlassen, dass ein Computer oder Prozessor die folgenden Schritte ausführt, umfasst: Senden eines ersten Signals von der lokalen Steuereinheit (4) an die Vorrichtung (2) vorübergehender Last, um die Vorrichtung vorübergehender Last zu schließen und um die Spannung zu der elektrischen Last zu verringern, beim Empfang eines Spannungs- oder Stromstörungssignals, und Senden eines zweiten Signals (48, 58) von der lokalen Steuereinheit (4) an die Vorrichtung (2) vorübergehender Last, um sie zu öffnen und um die Vorrichtung vorübergehender Last von dem Unterwasserverteilungsbus (14), der eine Überspannung auf dem Leistungslastsystem (3) vermieden oder verringert hat, zu trennen, beim Detektieren einer verringerten Spannung oder einer innerhalb eines Bereichs auf der Unterwasserseite.

## Revendications

1. Réseau de distribution sous-marin comprenant au moins un bus de distribution sous-marin (14) connectant un système de charge d'énergie (3) à une énergie électrique fournie par une alimentation en courant alternatif (1) au moyen d'au moins un long câble (7), le bus de distribution sous-marin (14) connectant le système de charge d'énergie (3) à une extrémité sous-marine du long câble (7), **caractérisé en ce que** ledit au moins un bus de distribution sous-marin (14) comprend une unité de commande locale (4), et un dispositif de charge temporaire (2),
où l'unité de commande locale (4) est agencée pour recevoir un signal de défaut de tension ou de courant et envoyer un premier signal au dispositif de charge temporaire (2), et où l'unité de commande locale (4) est agencée pour détecter une tension réduite ou située dans la plage du côté sous-marin et envoyer un deuxième signal au dispositif de charge temporaire (2),
où ledit dispositif de charge temporaire (2) est agencé, à la réception du premier signal provenant de l'unité de commande locale (4), pour fermer (42, 52, 42') et réduire la tension vers le système de charge d'énergie (3) et, à la réception du deuxième signal (48, 58) provenant de l'unité de commande locale (4), est agencé pour ouvrir et déconnecter ledit dispositif de charge temporaire (2) du bus de distribution sous-marin (14) en ayant évité ou réduit une surtension au niveau du système de charge d'énergie (3).

2. Réseau de distribution sous-marin selon la revendication 1, **caractérisé en ce que** ledit dispositif de charge temporaire (2) comprend tout dispositif du groupe constitué des éléments suivants : un circuit pied de biche à base de thyristor ; un pont de diodes ; un pont de diodes avec commutateur actif.

3. Procédé de commande d'un dispositif de charge temporaire (2) d'un réseau de distribution sous-marin comprenant un bus de distribution sous-marin (14), le dispositif de charge temporaire (2) étant agencé de manière à pouvoir être connecté au bus de distribution sous-marin (14) connectant un système de charge d'énergie (3) à l'énergie électrique fournie par une alimentation en courant alternatif (1) au moyen d'au moins un long câble (7), le bus de distribution sous-marin (14) connectant le système de charge d'énergie (3) à une extrémité sous-marine du long câble (7), le procédé étant **caractérisé en ce que** le bus de distribution sous-marin (14) comprend une unité de commande locale (4), où l'unité de commande locale (4) est agencée pour recevoir un signal de défaut de courant et envoyer un premier signal au dispositif de charge temporaire (2), et où l'unité de commande locale (4) est agencée pour détecter une tension réduite ou dans la plage du côté sous-marin et envoyer un deuxième signal au dispositif de charge temporaire (2), et **en ce que** ledit dispositif de charge temporaire (2) est agencé, à la réception du premier signal provenant de l'unité de commande locale (4) pour fermer (42, 52, 42') et réduire la tension vers le système de charge d'énergie (3) et, à la réception du deuxième signal (48, 58) provenant de l'unité de commande locale (4), est agencé pour ouvrir et déconnecter ledit dispositif de charge temporaire (2) du bus de distribution sous-marin (14) en ayant évité ou réduit une surtension au niveau du système de charge d'énergie (3).

4. Procédé selon la revendication 3, **caractérisé en ce que** ledit dispositif de charge temporaire (2) comprend tout dispositif du groupe constitué des éléments suivants : un circuit pied de biche à base de thyristor ; un pont de diodes ; un pont de diodes avec commutateur actif, et **en ce qu'**il est agencé pour l'étape supplémentaire de fermeture dans un ou plusieurs étages de charge de puissance (42', 2b-2c).

5. Procédé selon la revendication 3, **caractérisé par** la réception dans l'unité de commande locale (4) d'une mesure ou d'une estimation de la condition d'erreur de tension et par l'envoi du premier signal de fermeture (42, 42', 52) audit dispositif de charge temporaire (2).

6. Procédé selon la revendication 3, **caractérisé par** la réception dans l'unité de commande locale (4) d'une mesure ou d'une estimation d'un changement ou d'un développement planifié d'une condition de tension, ou d'une condition de courant, et l'envoi du premier signal de fermeture et la fermeture (52) dudit dispositif de charge temporaire (2).

7. Procédé selon la revendication 3, **caractérisé par** la réception dans l'unité de commande locale (4) d'une mesure ou d'une estimation d'une chute de charge et l'envoi du premier signal de fermeture et la fermeture (52) dudit dispositif de charge temporaire (2) .

8. Procédé selon la revendication 3, **caractérisé par** la réception dans l'unité de commande locale (4) d'un signal pour une magnétisation d'au moins un moteur électrique (27a-d), ou d'au moins une autre charge (28, 29), et l'envoi d'au moins un premier signal de fermeture (42') audit dispositif de charge temporaire (2) .

9. Procédé selon l'une quelconque des revendications 3 à 8, **caractérisé par** la réception dans l'unité de commande locale (4) d'une mesure ou d'une estimation d'une condition de tension qui est adaptée à un point de consigne ou qui se situe dans une plage, et l'envoi d'un deuxième signal au dispositif de charge temporaire (2) pour une déconnexion (48, 58) ou une ouverture.

10. Procédé selon la revendication 5, **caractérisé par** la réception dans l'unité de commande locale (4) d'une mesure ou d'une estimation d'une condition de tension qui est adaptée à un point de consigne ou qui doit se situer dans une plage, et la sélection (41b) d'une connexion optimale ou d'une action de commande en fonction de l'un quelconque des éléments suivants : signal de condition d'erreur de tension, d'autres conditions détectées ou estimées dans le circuit.

11. Procédé selon la revendication 5, **caractérisé par** la réception d'un signal (40) de la condition d'erreur de tension et le déclenchement d'une action de commande qui comprend l'envoi du premier signal de fermeture au dispositif de charge temporaire (2), lequel signal peut être l'un quelconque parmi le groupe suivant : une demande de fermeture du dispositif de charge temporaire (42) ; une demande de fermeture du dispositif de charge temporaire dans des étages de charge de puissance (42') ; une demande de fermeture du dispositif de charge temporaire à au moins un instant estimé tₑ (52).

12. Procédé selon la revendication 5, **caractérisé par** la réception d'un signal de la condition d'erreur de tension et le déclenchement d'une action de commande comprenant l'envoi d'un signal à un transformateur (6) ou à une unité de commande de transformateur (5) demandant au moins une action de commande de tension (44, 46).

13. Procédé selon la revendication 5, **caractérisé par** la réception d'un signal d'une condition d'erreur estimée de la tension à un instant estimé (tₑ) et le déclenchement d'une action de commande comprenant l'envoi d'un signal à un transformateur (6) ou à une unité de commande de transformateur (5) demandant une action de commande de tension (44, 46) à l'instant estimé (tₑ) .

14. Procédé selon l'une quelconque des revendications 3 à 13, **caractérisé par** la réception dans l'unité de commande locale (4) d'une mesure d'une tension, ou d'une mesure de courant qui est adaptée à un point de consigne ou qui se situe dans une plage, et l'envoi du deuxième signal audit dispositif de charge temporaire pour une ouverture et une déconnexion (48, 58) .

15. Procédé selon l'une quelconque des revendications 3 à 13, **caractérisé en ce que** le dispositif de charge temporaire (2) est connecté à plus d'une charge de puissance (26, 27a-f, 23-25, 28, 29, 30) et par l'étape supplémentaire comprenant de demander au dispositif de charge temporaire de fermer, respectivement d'ouvrir (48, 58), une ou plusieurs fois, lors de la connexion ou de la déconnexion d'un ou plusieurs transformateurs (26, 36a-f).

16. Produit programme informatique stocké sur un support non transitoire lisible par ordinateur qui, lorsqu'il est chargé dans un processeur ou une unité de commande, commande un dispositif de charge temporaire (2) d'un réseau de distribution sous-marin comprenant un bus de distribution sous-marin (14), le dispositif de charge temporaire (2) étant agencé de manière à pouvoir être connecté à un bus de distribution sous-marin (14) connectant une charge d'énergie (3) à une énergie électrique fournie par une alimentation en courant alternatif (1) au moyen d'au moins un long câble (7), le bus de distribution sous-marin (14) connectant le système de charge d'énergie (3) à une extrémité sous-marine du long câble (7), le dispositif de charge temporaire (2) étant agencé pour être contrôlé par une unité de commande locale (4), ledit programme comprenant des parties de code logiciel ou un code informatique adapté pour amener un ordinateur ou un processeur à exécuter les étapes suivantes : lors de la réception d'un signal de défaut de tension ou de courant, envoyer un premier signal depuis l'unité de commande locale (4) audit dispositif de charge temporaire (2) pour fermer ledit dispositif de charge temporaire et réduire la tension à la charge électrique et, à la détection d'une tension réduite ou située dans la plage du côté sous-marin, et envoyer un deuxième signal (48, 58) de l'unité de commande locale (4) audit dispositif de charge temporaire (2) pour ouvrir et déconnecter ledit dispositif de charge temporaire du bus de distribution sous-marin (14) en ayant évité ou réduit une surtension au niveau du système de charge d'énergie (3).
